(19) Europäisches Patentamt
European Patent Office
Office européen des brevets

(11) **EP 1 903 656 B1**

(12) **EUROPÄISCHE PATENTSCHRIFT**

(45) Veröffentlichungstag und Bekanntmachung des Hinweises auf die Patenterteilung:
**17.08.2011 Patentblatt 2011/33**

(51) Int Cl.:
**_H02J 3/38_** _(2006.01)_

(21) Anmeldenummer: **07018624.2**

(22) Anmeldetag: **21.09.2007**

(54) **Verfahren zur Primärregelung für ein Verbundstromnetz**

Method for primary control for a joint electricity network

Procédé de réglage primaire pour un secteur composite

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **22.09.2006 DE 102006044921**

(43) Veröffentlichungstag der Anmeldung:
**26.03.2008 Patentblatt 2008/13**

(73) Patentinhaber: **E.ON Wasserkraft GmbH**
**84034 Landshut (DE)**

(72) Erfinder: **Keil, Stefan**
**84513 Töging (DE)**

(74) Vertreter: **Bücken, Helmut**
**Haylerstrasse 19**
**80993 München (DE)**

(56) Entgegenhaltungen:
**EP-A- 1 414 126     DE-A1-102006 010 852**

- **DRAXLER A ET AL: "QUALITATSKRITERIEN IM BEREICH DER STROMERZEUGUNG" ELEKTROTECHNIK UND INFORMATIONSTECHNIK, SPRINGER VERLAG, WIEN, AT, Bd. 112, Nr. 10, 1. Oktober 1995 (1995-10-01), Seiten 531-538, XP000535935 ISSN: 0932-383X**

**Beschreibung**

Die Erfindung bezieht sich auf ein Verfahren nach dem Oberbegriff des ersten Anspruchs.

Zum störungsfreien Betrieb eines elektrischen Verbundnetzes sind an die an das Netz angeschlossenen Kraftwerke bestimmte Anforderungen zu stellen. Im Falle eines Ungleichgewichtes zwischen der erzeugten Leistung und der verbrauchten Leistung im Netz, z. B. durch Leistungseinbruch bei Abschaltung eines großen Kraftwerkes und dem damit verbundenem Frequenzeinbruch, müssen die am Netz beteiligten Kraftwerke zur Herstellung des Normalbetriebes sofort Leistungsreserven aufbringen und in das Netz einspeisen beziehungsweise die eingespeiste Leistung reduzieren.

Hierzu dient die so genannte Primärregelung. Danach hat ein in das Netz einspeisender Kraftwerksbetreiber bei Erzeugungseinheiten von größer 100 MW Leistung mindestens 2%, öfters auch 10%, seiner Nennleistung für die Primärregelung in einer Zeitspanne von maximal 30 Sekunden zusätzlich zu aktivieren. Diese Leistungssteigerungen sind linear bereitzustellen und für maximal 15 Minuten zu halten. Danach übernimmt die Sekundärregelung die Leistungsbereitstellung.

Die Voraussetzungen für Kraftwerksbetreiber an der Einspeisung von elektrischer Leistung in Übertragungsnetze und damit auch die Voraussetzung zur Bereitstellung von Primärregelleistung sind in dem TransmissionCode 2003 "Netz- und Systemregeln der deutschen Übertragungsnetzbetreibee", August 2003, sowie in dessen Anhang D1 "Unterlagen zur Präqualifikation für die Primärregelleistung für die ÜNB" (Stand August 2003) beschrieben.

Damit wird verlangt, dass für die erforderliche Regelgenauigkeit in der Primärregelung bereits ab einer Frequenzänderung von 10 mHz reproduzierbare Leistungsverstellungen erzeugt werden. Diese Verstellung errechnet sich aus der vereinbarten maximal zur Verfügung zu stellenden Primärregelleistung und dem gesamten zu berücksichtigenden Frequenzbereich.

Bisher wurde diese Primärregelung hauptsächlich durch thermische Kraftwerke bereitgestellt. Diese Bereitstellung verursacht zum Teil sehr hohe Gestehungskosten.

Alternativ können Pumpspeicher-Kraftwerke zur Bereitstellung der Primärregelung verwendet werden. Hierbei müssen aber hohe Verluste für die Bereitstellung (Wälzwirkungsgrad, Verluste und Kavitationsschäden im Leerlauf der Turbinen, Energie steht nicht mehr für die Sekundärregelung zur Verfügung) in Kauf genommen werden.

Ein Verfahren zur Primärregelung für ein Netz für thermische Kraftwerke beschreibt die DE 102 60 409 B3. Um hier die Wirkungsgradverluste gering zu halten, wird vorgeschlagen, mehrere Kraftwerksblöcke eines Unternehmens als Einheit zur Ausregelung von quasistationären Frequenzabweichungen von +/-200 mHz für das Netz zusammenzufassen. Trotzdem entstehen hier nicht zu vernachlässigende Verluste.

Wirtschaftlich interessant wäre es, Laufwasserkraftwerke zur Primärregelung heranzuziehen, da hier keine Bereitstellungskosten in Form von vorgehaltener Antriebsenergie für die Turbinen anfallen.

Häufig sind Turbinen in Wasserkraftwerken noch mit mechanischen beziehungsweise analog-elektronischen Turbinenreglern ausgestattet. Eine reproduzierbare Leistungsänderung der von Turbinen mit derartigen Reglern angetriebenen Generatoren verlangt eine Mindestdauer der Stellbefehle zum Verstellen der Regler. Dies wird im Folgenden unter Mindestverstellung verstanden. Diese Stellbefehle erzeugen eine zu große Leistungsänderung, die einer größeren Frequenzänderung als der geforderten von 10 mHz entspricht.

Oft weisen diese mechanischen beziehungsweise analog-elektronischen Turbinenregler auch noch ein größeres mechanisches Spiel auf, so dass sie auch aus diesem Grund nicht die notwendige reproduzierbare Mindestverstellung und damit die erforderliche Regelgüte erreichen.

Damit können Turbinen in Laufwasserkraftwerken nicht zur Primärregelung herangezogen werden, da deren Turbinenregler keine Mindestverstellung erlauben, die einer Frequenzänderung von 10 mHz entspricht, es sei denn, sie werden mit sehr hochwertigen digitalen Turbinenreglern ausgestattet; wie in Draxler, A. et al: "Qualitätsregelung im Bereich der Stromerzeugung", Elektrotechnik und Informationstechnik, Springer Verlag, Wien, AT, Band 112, Nr. 10, 1. Oktober 1995, Seiten 531 bis 538, ausführlich beschrieben ist. Die Umrüstung verursacht für sich aber sehr hohe Kosten und ist zudem zeitaufwendig. Außerdem ist mit einer hohen Zahl von Stellbefehlen ein hoher Verschleiß in den hydraulischen Verstellorganen der Turbinen sowie in den Lagerungen der Stell- und Regelorgane zu erwarten.

In der DE-B 9 02 824 aus dem Jahr 1951 wird zwar von Primärreglern gesprochen, jedoch ausschließlich im Zusammenhang mit einer Übergabeleistung aus einem Netzverband. Dieser Stand der Technik beschäftigt sich mit einer kostengünstigen Methode zur Verringerung der Netzpendelungen, die bei einer Gestellung einer variablen Übergabeleistung entstehen. Hierfür wird eine Mischlösung bzw. Kombination von drehzahl- und leistungsgeregelten Turbinen vorgeschlagen. Einen Hinweis, wie eine Primärregelung von Lauf-wasserkraftwerken kostengünstig zu erzielen ist, ist dieser Schrift nicht zu entnehmen.

Aufgabe der vorliegenden Erfindung ist es deshalb, ein Verfahren aufzuzeigen, mit dem Turbinen in Wasserkraftwerken, insbesondere in Laufwasserkraftwerken mit mechanischen beziehungsweise analog-elektronischen Tur-binenreglern, zur Primärregelung herangezogen werden können.

Diese Aufgabe wird erfindungsgemäß durch die Merkmale des ersten Anspruchs gelöst.

Die Erfindung basiert auf der Erkenntnis, dass durch die Zusammenschaltung mehrerer Wasserkraftwerke zu einer Erzeugungsgruppe auch die geforderte Ansprechempfindlichkeit von 10 mHz von mindestens einer Turbine dieser Erzeugungsgruppe, bezogen auf die gesamte Gruppe, erzielt werden kann.

Der Vorteil der Erfindung ist darin zu sehen, dass nunmehr Turbinen in Wasserkraftwerken ohne jegliche mechanische Änderungen an den Turbinen oder ihren bestehenden Regelorganen zur Primärregelung herangezogen werden können. Diese kann sehr wirtschaftlich zur Verfügung gestellt werden, da "keine Brennstoffkosten" wie bei anderen Kraftwerken anfallen. Es wird lediglich eine lokale (d.h. pro Kraftwerk) sowie eine übergeordnete Regelung benötigt, die auf Computerbasis realisiert werden kann.

Ein weiterer Vorteil der Erfindung liegt darin, dass damit - unabhängig von der maschinentechnischen und reglertechnischen Ausstattung alle Wasserkraftwerkstypen zur Primärregelung herangezogen werden können. Hierzu werden bevorzugt mehrere Wasserkraftwerke zumindest eines Flusses als Erzeugungsgruppe bezüglich der Leistungsabgabe zusammengeschaltet, wobei die überwiegende Anzahl der Turbinen bzw. der Wasserkraftwerke der Erzeugungsgruppe in einer Grobregelung betrieben werden und nur eine oder einige wenige Turbinen bzw. Wasserkraftwerke in einer Feinregelung arbeiten. Die in der Grobregelung arbeitenden Turbinen/Wasserkraftwerke werden nach ihren normalen Kennlinien betrieben und greifen erst in sicher beherrschbaren Schritten, die beispielsweise einer Frequenzänderung von 50 mHz entsprechen, ein.

Dadurch, dass nur eine Turbine oder einige wenige Turbinen in der Feinregelung arbeiten, wird in vorteilhafter Weise der Verschleiß in den hydraulischen Verstellorganen durch die häufigen Stellbefehle - bezogen auf alle Turbinen der Erzeugungsgruppe - minimiert, da er nur bei diesen wenigen Turbinen auftritt. Diese führen stellvertretend für alle Turbinen der Erzeugungsgruppe Leistungsänderungen, die für eine Frequenzänderung in 10 mHz-Schritten benötigt werden, aus und legen deshalb längere Verstellwege zurück. Der Verschleiß reduziert sich jedoch durch die geringe Anzahl an Start- und Stoppvorgängen der Verstellbewegung. Außerdem ergibt sich der Vorteil, dass zur Feinregelung dediziert Turbinen ausgewählt werden können, die konstruktionsbedingt (z.B. wegen besserer Lagerung oder Hydraulikanlagen) verschleißärmer betrieben werden können.

Der Grundgedanke der Erfindung besteht also darin, dass ein Großteil der an der Primärregelung beteiligten Turbinen/Wasserkraftwerke ohne jegliche Änderung an ihren Turbinenreglern weiterhin betrieben werden können, da von ihnen innerhalb der Primärregelung nur Leistungsänderungen und damit Netz-Frequenzänderungen abverlangt werden, die die vorhandenen analog elektronischen Turbinenregler sicher beherrschen. Dies sind in der Regel Frequenzänderungen in 50 mHz Schritten bzw. jeder Schritt bedeutet erfindungsgemäß einen Schritt/Sprung um einen Anteil der gesamten von der Erzeugungsgruppe zur Verfügung gestellten Primärregelleistung.

Die zur Feinregelung ausgewählten Wasserkraftwerke bzw. deren Turbinen stellen während der Primärregelung eine Leistung zur Verfügung, die bezogen auf die Primärregelleistung nur einem geringeren Anteil entspricht und in ihrer Höhe so gewählt ist, dass sie mindestens gleich oder höher als die entsprechende Leistungsabgabe bei Mindestverstellung der beteiligten Turbinen/Wasserkraftwerke ist. Diese Leistungsabgabe wird in mehreren Schritten/Stufen geändert, wobei jede Stufe eine Leistungsänderung bedeutet, die für eine Frequenzänderung von 10 mHz benötigt wird, bezogen auf die gesamte zur Verfügung gestellte Primärregelleistung.

Die Auswahl der Turbinen/Kraftwerke, die in Fein- und in Grobregelung arbeiten, hängt von der Höhe der bereit gestellten Primärregelleistung im quasistationären Frequenzbereich und der Leistungsänderung bei Mindestverstellung der beteiligten Turbinenregler ab.

Ein Großteil der Primärregelleistung erzeugenden Turbinen/Kraftwerke der Erzeugungsgruppe wird in Grobregelung betrieben und wird deshalb schrittweise Leistungsänderungen bei sicher beherrschbaren Stellbefehlen für die Turbinenregler erbringen, die eine deutlich höhere Frequenzänderung als die geforderten 10 mHz erzeugen. Die notwendigen Zwischenschritte zwischen den schrittweisen Leistungsänderungen der in Grobregelung arbeitenden Turbinen/Kraftwerken der Erzeugungsgruppe werden durch die in Feinregelung arbeitenden Turbinen/Kraftwerke erbracht.

Entscheidend für die Auswahl der in Feinregelung arbeitenden Turbinen/Wasserkraftwerke ist also, dass die Leistungsänderungen, die für die geforderten Frequenzschritte von 10 mHz notwendig sind, von Turbinen/Kraftwerken erbracht werden, deren Mindestverstellleistung niedriger ist als die notwendigen Leistungsänderungen entsprechend der geforderten Frequenzschritte von 10 mHz.

Zwar beschreibt die DE-C 3 78 599 aus dem Jahr 1921 eine Grob- und eine Feinregelung für Turbinen eines Wasserkraftwerkes. Hierunter wird aber bei dieser Schrift verstanden, dass einige Turbinen mit aufwendigen und damit teueren Regelorganen, z.B. beweglichen Leitschaufeln, ausgestattet werden, die dadurch in weiten Bereichen geregelt werden können. Hierfür wird der Begriff "Feinregelung" verwendet. Die übrigen Turbinen des Kraftwerkes werden nur ein- oder ausgeschaltet, also nicht geregelt, wofür der Begriff "Grobregelung" in diesem Stand der Technik verwendet wird. Dies entspricht aber nicht der Bedeutung in der vorliegenden Erfindung, da heutzutage davon ausgegangen wird, dass alle Turbinen standardmäßig mit Regelorganen ausgestattet sind.

Die Unteransprüche beschreiben vorteilhafte Ausgestaltungen der Erfindung.

Die Weiterbildungen nach Ansprüchen 2 bis 9 beschreiben eine sehr vorteilhafte Aufteilung der Turbinen für die Feinregelung und Grobregelung, wobei sichergestellt ist, dass die Frequenzänderungen schnell wieder ausgeglichen werden.

Der Anspruch 10 beschreibt eine vorteilhafte Ausgestaltung für die Regelung der Erzeugungsgruppe.

Die Weiterbildung nach Anspruch 11 und 12 beschreibt eine einfache Möglichkeit der Auswahl und Steuerung der zur Primärregelung vorgesehenen Kraftwerke der Erzeugungsgruppe.

Je nach Einsatzfall kann die Weiterbildung der Erfindung nach Anspruch 13 zweckmäßig sein.

Im Folgenden wird die Erfindung an Hand eines ausgewählten Beispiels näher beschrieben. Es stellen dar:

Figur 1:    idealisierte Kennlinie für die Primärregelleistung für ein Kraftwerk;

Figur 2:    geforderte Kennlinie für die Primärregelung für ein Kraftwerk;

Figur 3:    realisierbare Kennlinie für ein Kraftwerk für die Primärregelung;

Figur 4:    grafische Darstellung der Regelschritte anhand von Kennlinien gemäß der Erfindung;

Figur 5:    ein schematisiertes Blockschaltbild eines Sollwertverteilers.

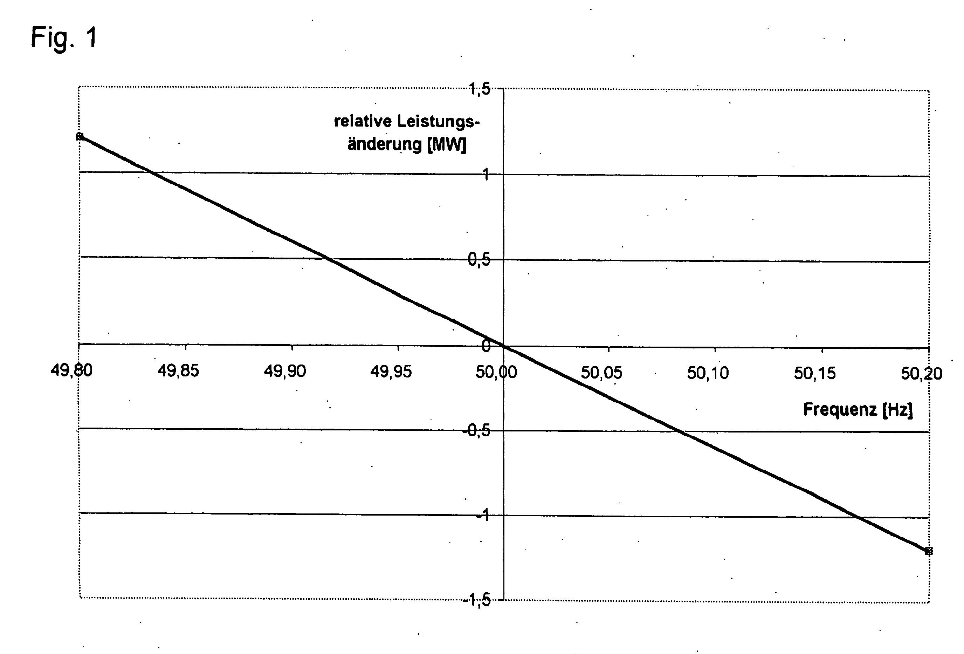

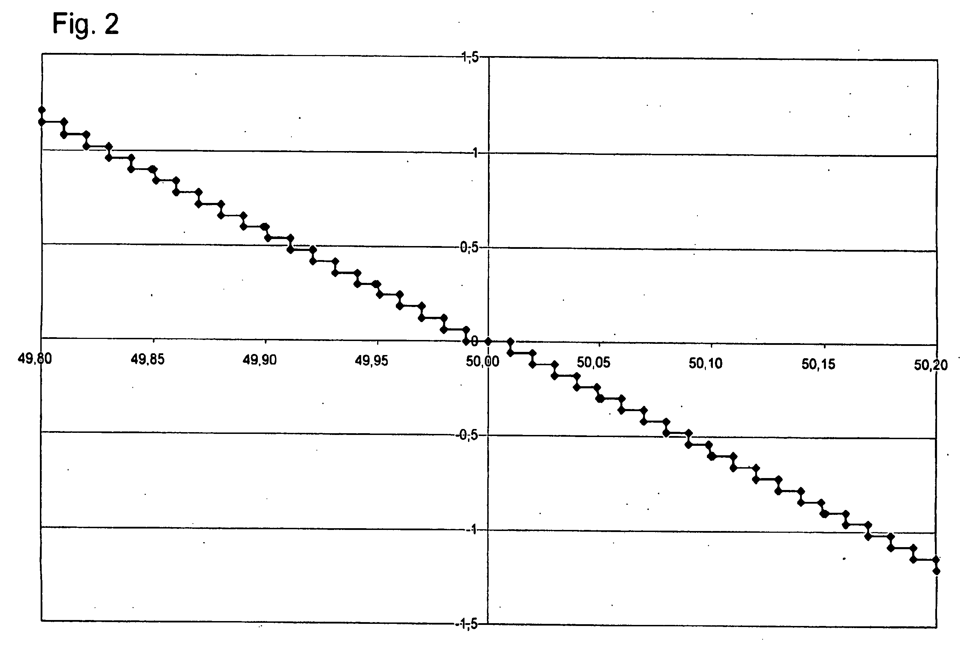

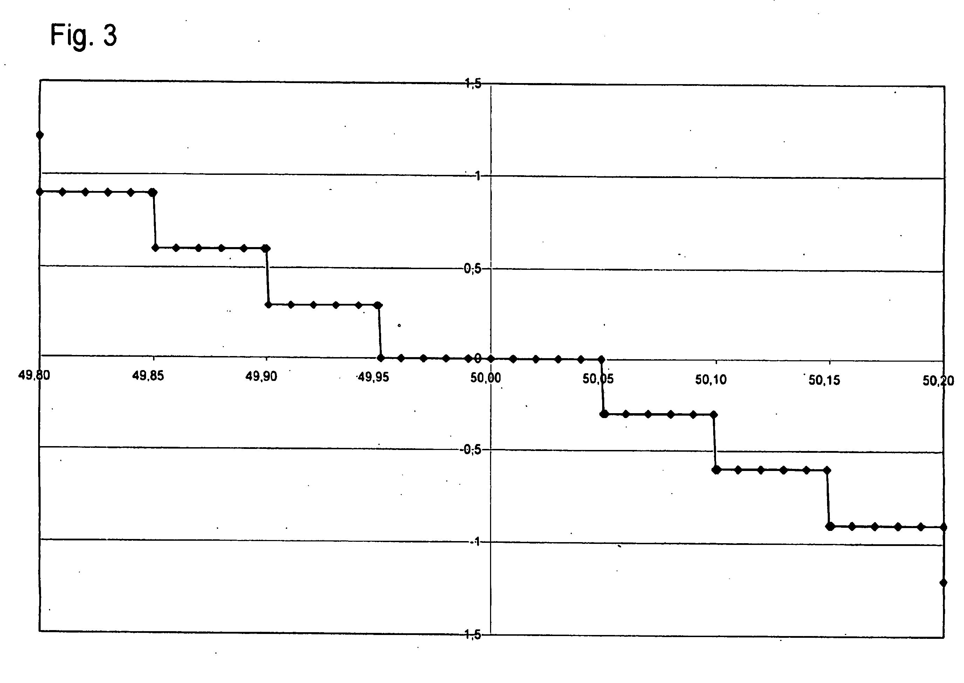

Die Figuren 1 bis 3 beschreiben den Stand der Technik, wobei die Figuren 1 und 2 den allgemein bekannten Zusammenhang zwischen Frequenzabweichung und Primärregelleistung darstellen, der von Netzbetreibern bei der Teilnahme an der Primärregelung erfüllt werden muss. Figur 3 zeigt die aus den Figuren 1 und 2 ableitbaren Konsequenzen für Laufwasserkraftwerke.

Figur 1 zeigt für ein beliebiges Laufwasserkraftwerk eines Flusses eine idealisierte Kennlinie zur Primärregelung.

Auf der Abszisse ist die Frequenz in Hertz, ausgehend von 50 Hz Normalfrequenz als Nullpunkt dargestellt. Der dargestellte Bereich umfasst den Bereich der quasistationären Frequenzabweichungen von +/- 200 mHz von dieser Normalfrequenz.

Die Ordinate stellt die mögliche Primärregelleistung in MW dar, die dieses beispielhafte Laufwasserkraftwerk zur Primärregelung bereitstellen kann. In diesem Beispiel sind es 1,2 MW.

Im Idealfall sollte die Leistung kontinuierlich zu- bzw. abnehmen, um kontinuierlich eine aufgetretene Frequenzabweichung von der Normalfrequenz von 50 Hz wieder auszuregeln.

In der Praxis kann diese idealisierte Kennlinie nicht erzeugt werden.

Es ist deshalb für die an der Primärregelung beteiligten Turbinen/Kraftwerke ausreichend, die Leistungsänderung stufenweise zu erbringen, wobei die dadurch erzeugte Frequenzänderung in 10 mHz Schritten ablaufen muss.

Eine derartige stufen- oder treppenförmige Kennlinie ist für das Beispielskraftwerk aus Figur 1 in Figur 2 dargestellt.

Man erkennt hieraus, dass bei einer maximal zur Verfügung gestellten Primärregelleistung von 1,2 MW bei einer Frequenzabweichung von +/- 200 mHz von der Normalfrequenz von 50 Hz eine Ausregelung der Frequenzabweichung in 10 mHz Schritten eine Leistungsänderung der Turbinen des Kraftwerkes in 0,06 MW Schritten erfordert.

Da aber reale Turbinenregler eine Mindestdauer ihrer Stellbefehle verlangen, um eine reproduzierbare konstante Leistungsänderung der angetriebenen Generatoren zu erzeugen, sind die geforderten Leistungsänderungen von 0,06 MW nicht darstellbar. Vielmehr bedingt ein Stellbefehl eine zu große Leistungsänderung, die in dem Beispielskraftwerk eine Leistungsänderung von 0,3 MW erzeugt, wie in Figur 3 dargestellt. Eine Leistungsänderung von 0,3 MW bedeutet aber einen Schritt entsprechend einer Frequenzänderung um 50 mHz. Dies ist aber nach den eingangs erwähnten Präqualifizierungsvoraussetzungen nicht erlaubt. Das Kraftwerk kann also nicht zur Primärregelung herangezogen werden. Auch ein Verbund mehrerer Kraftwerke ändert hieran nichts.

Hier schafft die vorliegende Erfindung auf einfache Art und Weise Abhilfe.

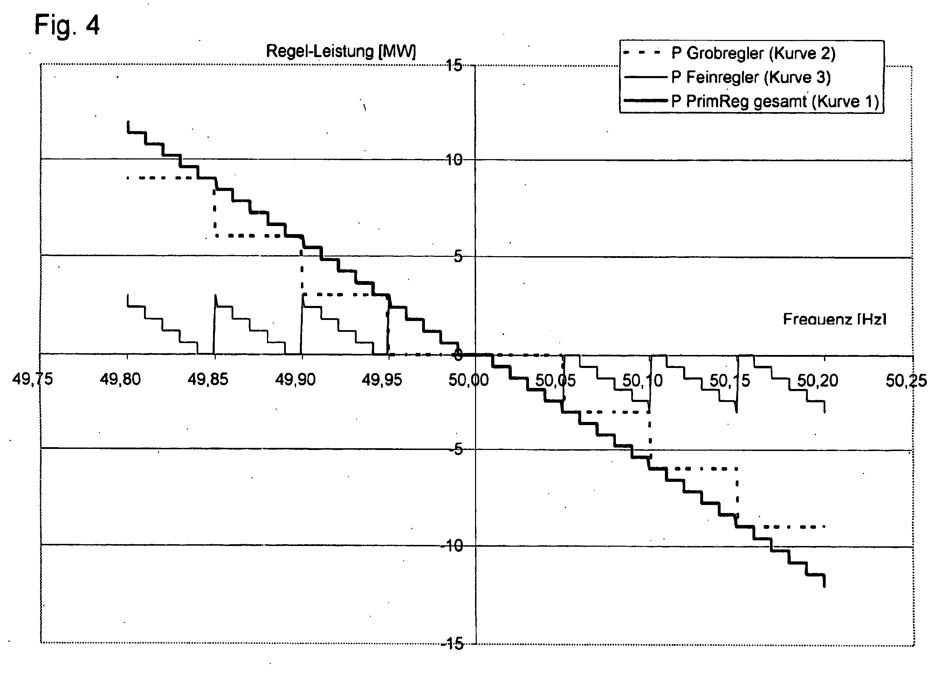

In Figur 4 ist schematisiert ein Diagramm mit den erfindungsgemäß erzielbaren Kennlinien einer Erzeugungsgruppe dargestellt.

Auf der Abszisse ist wiederum wie bei den vorhergehenden Figuren die Frequenz in Hertz, ausgehend von 50 Hz Normalfrequenz als Nullpunkt dargestellt. Der dargestellte Bereich umfasst den Bereich der quasistationären Frequenzabweichungen von +/- 200 mHz von dieser Normalfrequenz.

Die Ordinate stellt ebenfalls wie bei den Figuren 1 bis 3 die von der Erzeugungsgruppe zur Verfügung gestellte Primärregelleistung in Megawatt dar. In diesem Beispiel wird unterstellt, dass als Primärregelleistung +/- 12 MW von der Erzeugungsgruppe zur Verfügung gestellt werden können. Dies müssen mindestens 2% der von der gesamten Erzeugungsgruppe im Verbundstromnetz angemeldeten Leistung sein. Im vorliegenden Beispiel wird von 10% der Gesamtleistung von 120 MW, die die Erzeugungsgruppe ins Netz einspeisen kann, ausgegangen.

Eine Kennlinie 1, die die geforderte Leistungssteigerung/Leistungsreduktion der zur Primärregelung herangezogenen Turbinen in Abhängigkeit der Frequenzänderungen im Netz darstellt (Sollkennlinie), verläuft nahezu als Gerade mit konstanter Steigung im quasistationären Frequenzänderungsbereich von +/- 200 mHz. Tatsächlich verläuft die Kennlinie 1 stufenförmig in 10 mHz Stufen (siehe auch Figur 2). Der Einfachheit halber wird aber im Folgenden von einer Geraden gesprochen.

Die Kennlinie 1 kann auch aus zwei Ästen mit unterschiedlicher Steigung bei unterschiedlicher Primärregelleistung für die Leistungssteigerung und die Leistungsreduktion bestehen.

Für das vorliegende Beispiel ist unterstellt, dass die kleinste sicher regelbare Mindestverstellung der in der Erzeugungsgruppe vorhandenen und zur Primärregelung ausgewählten Turbinen 0,5 MW beträgt.

Aus dem Diagramm in Figur 4 ist ablesbar, dass eine Frequenzänderung um 10 mHz eine Leistungsänderung um 0,6 MW erfordert.

Da die in diesem Beispiel für die Feinregelung ausgewählten Turbinen bei Mindestverstellung 0,5 MW Leistungsänderung bereitstellen können, können sie zur Primärregelung erfindungsgemäß herangezogen werden.

Gemäß der vorliegenden Erfindung teilt sich die bereitzustellende Primärregelleistung von 12 MW auf eine größere Anzahl von in Grobregelung und auf eine geringere Anzahl von in Feinregelung arbeitenden Turbinen/Laufwasserkraftwerke auf.

Im vorliegenden Beispiel wird eine Aufteilung im Verhältnis von 75% auf die in Grobregelung und zu 25% auf die in Feinregelung arbeitenden Turbinen/Laufwasserkraftwerke angenommen, um die Frequenzänderungen so schnell als möglich auszugleichen.

Dies bedeutet in diesem Beispiel mit anderen Worten, dass alle in Grobregelung arbeitenden Turbinen/Laufwasserkraftwerke 9 MW Primärregelleistung erbringen müssen und die übrigen 3 MW von den in Feinregelung arbeitenden Turbinen erbracht werden müssen. Weiterhin müssen die in der Grobregelung arbeitenden Turbinen/Laufwasserkraftwerke damit innerhalb des quasistationären Frequenzänderungsbereiches von +/- 200 mHz in drei Regelstufen à 50 mHz ihre Gesamtprimärregelleistung 9 MW erbringen. Sie müssen also pro Regelstufe jeweils eine Änderung von 3 MW bereitstellen können.

In der Praxis hängt diese Aufteilung von den für die Primärregelung zur Verfügung stehenden Turbinen/Kraftwerke der Erzeugungsgruppe und deren Regelorganen ab, d.h. es muss sichergestellt sein, dass sowohl für die in Grobregelung arbeitenden Turbinen/Kraftwerken als auch die in Feinregelung arbeitenden Turbinen/Kraftwerken immer Leistungsänderungen verlangt werden, die größer oder gleich der bei ihrer Mindestverstellung abgebbaren Leistungsänderung sind.

Ziel ist es, möglichst viele Turbinen/Kraftwerke in Grobregelung arbeiten zu lassen und nur so wenige Turbinen/Kraftwerke wie möglich zur Feinregelung heran zu ziehen.

Somit werden in diesem Beispiel 6 Turbinen zur Grobregelung benötigt. Die Kennlinie dieser Turbinen ist in Figur 4 mit 2 bezeichnet.

Gemäß der Erfindung muss in diesem Beispiel die Feinregelung 3 MW erbringen. Diese 3 MW müssen in 5 Schritten oder Regelstufen erbracht werden, damit die Forderung von Frequenzänderungen in 10 mHz Schritten, bezogen auf die gesamte, von der Erzeugungsgruppe zu erbringende Primärregelleistung, eingehalten wird. Somit muss in jeder Regelstufe exakt 0,6 MW Regelleistung bereitgestellt werden. Dies können 2 Turbinen mit einer sicher beherrschbaren Mindestverstellleistung von 0,25 MW oder 1 Turbine mit einer sicher beherrschbaren Mindestverstellleistung von 0,5 MW sein. Analoges gilt für die Betrachtung von Turbinengruppen, z.B. ein ganzes Kraftwerk.

Im vorliegenden Beispiel wird von einer Turbine mit einer Mindestverstellleistung von 0,5 MW ausgegangen. Im konkreten Beispiel gibt sie pro sicher beherrschbaren Regelschritt eine Leistungsänderung von 0,6 MW ab.

Die Kennlinie 3 beschreibt die Leistungsänderung der Turbine in Feinregelung. Die Kennlinie 3 verläuft in Stufen parallel zur Kennlinie 1. Beide Kennlinien haben also die gleiche Steigung.

Somit werden in diesem Beispiel maximal 7 Turbinen mit einer Mindestverstellleistung von 0,5 MW benötigt, um eine Primärregelleistung von 12 MW in 10 mHz Schritten bereitzustellen.

Im Folgenden wird der Fall einer langsamen Frequenzänderung beschrieben, wie sie beispielsweise durch Änderungen im Verbraucherverhalten der am Verbundnetz angeschlossenen Verbraucher auftreten kann.

Alle an der Primärregelung beteiligten Turbinen sind in der Erzeugungsgruppe am Netz, aber nicht mit ihrer vollen Leistung, sondern können in Summe die in der Primärregelung verlangte Regelleistung von wiederum z.B. +/- 12 MW erbringen. Die Frequenz des Verbundnetzes wird in jedem Kraftwerk separat ständig in an sich bekannter Weise überwacht.

Sinkt sie langsam, beispielsweise ausgehend von 50,0 Hz um 40 mHz, so muss gemäß der Kennlinie 1 eine Primärregelleistung von 2,4 MW bereitgestellt werden. Dies wird allein durch eine Erhöhung der Leistungsabgabe der in Feinregelung arbeitenden Turbine um 2,4 MW erreicht. Anschließend wird bei wieder steigender Frequenz diese Leistungserhöhung in 4 Schritten à 10 mHz in Leistungsstufen von jeweils 0,6 MW zurückgenommen.

Sinkt die Frequenz des Verbundnetzes ausgehend von 50,0 Hz beispielsweise um 60 mHz, so entspricht dies gemäß Kennlinie 1 einer zusätzlichen Leistungsanforderung von 3,6 MW. Diese wird durch Anhebung der in Grobregelung arbeitenden 6 Turbinen um eine Regelstufe, also um insgesamt 3 MW und durch Anhebung der in Feinregelung arbeitenden Turbine um 1 Regelstufe auf 0,6 MW erreicht. Die geänderte Frequenz von 60 mHz entspricht also einer Regelstufe der in Grobregelung arbeitenden Turbinen und einer der in Feinregelung arbeitenden Turbine.

Um nun bei wieder ansteigender Frequenz die Primärregelungs-Kennlinie in Summe zu erfüllen, wird die Leistungsabgabe aller in Grobregelung arbeitenden Turbinen um eine Regelstufe auf 0 MW Primärregelleistung (d.h. auf deren Ausgangsleistung) zurückgefahren und gleichzeitig die Leistungsabgabe der in Feinregelung arbeitenden Turbine auf 3 MW erhöht, um anschließend in 5 Schritten um jeweils 0,6 MW bei einer Erhöhung der Frequenz wieder auf ihre Anfangsleistung reduziert zu werden.

Im Folgenden wird ein Störfall im Verbundnetz, beispielsweise durch Ausfall eines großen Kraftwerkes, angenommen. Damit entsteht im Verbundnetz ein Minderangebot von Leistung und die Frequenz sinkt schlagartig von 50 Hz auf z.B. 49,80 Hz.

Gemäß der Kennlinie 1 muss nun die gesamte Primärregelleistung von 12 MW zur Verfügung gestellt werden. Dies wird dadurch erreicht, dass alle Turbinen in Grobregelung zusammen 9 MW Primärregelleistung abgeben und die Turbine(n) in Feinregelung 3 MW abgibt.

Bei wieder steigender Frequenz wird die Turbine in Feinregelung in 5 Schritten (Stufen) entsprechend 10 mHz um jeweils 0,6 MW in ihrer Leistungsabgabe zurückgefahren.

Überschreitet die Frequenz den Wert von 49,85 Hz wieder, so können alle in Grobregelung arbeitenden Turbinen um je 1 Regelstufe ihrer Primärregelleistung, also um in Summe 3 MW, zurückgenommen werden, während gleichzeitig die Turbine in Feinregelung wieder auf ihre Primärregelleistung von 3 MW hochgefahren wird. Bei einer Frequenz von 49,85 Hz wird somit eine Primärregelleistung von 9 MW (6 MW durch Turbinen in Grobregelung und 3 MW durch die Turbine in Feinregelung) benötigt und bereitgestellt.

Anschließend wird die Turbine in Feinregelung wieder in 5 Regelstufen in ihrer Primärregelleistung zurückgenommen und dann die Turbinen in Grobregelung um eine weitere Stufe bei gleichzeitiger Erhöhung der Leistung der Turbine in Feinregelung.

Der Primärregelung nachgeschaltet wird bei länger andauernder Frequenzabweichung die erhöhte Leistungseinspeisung der übrigen im Verbundnetz verbliebenen Kraftwerke (Sekundärregelung), so dass diese nun die Bereitstellung der nachgefragten Leistung zur Anpassung der Frequenz auf den Sollwert von 50 Hz übernehmen und damit die zur Primärregelung ausgewählten Turbinen wieder zur Ausregelung neuer Frequenzabweichungen zur Verfügung stehen.

Analoges gilt, wenn die Frequenz, beispielsweise hervorgerufen durch einen Großverbraucher, der plötzlich von Netz genommen wird, ansteigt. Dann muss durch die Primärregelung in der oben beschriebenen Weise der Frequenzanstieg schrittweise in 10 mHz Schritten auf Sollfrequenz durch Aufteilung der Turbinen in Grob- und Feinregelung zurückgenommen werden.

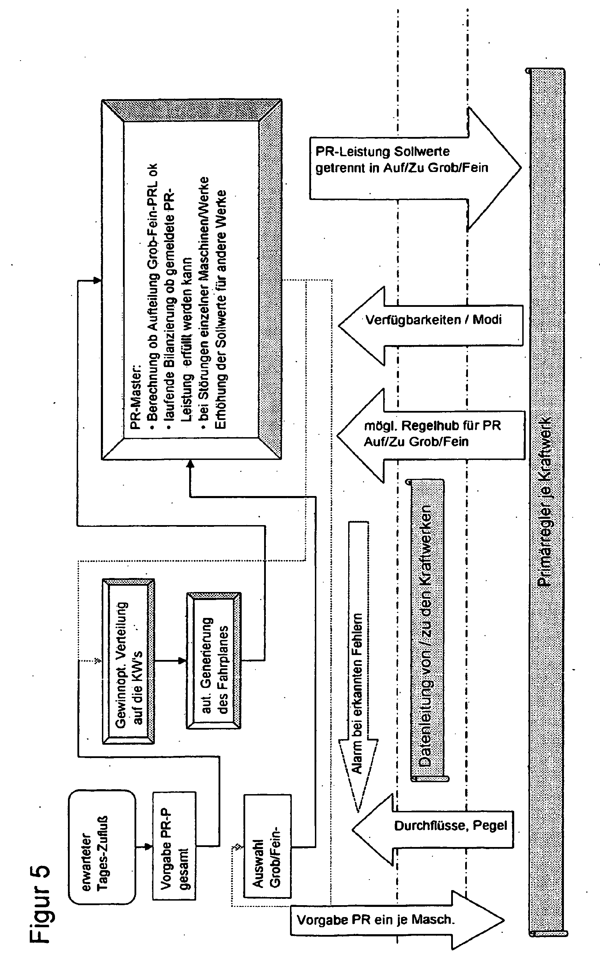

In Figur 5 ist ein Blockschaltbild des für die erfindungsgemäße Regelung notwendigen Sollwertverteilers (PR Master) dargestellt. Er wird in der zentralen Leitwarte als anwenderspezifische Software in den bereits vorhandenen Leitwartenrechnern installiert. Er hat die Aufgabe, eine Leistungsgesamtbilanz zu bilden, um zu ermitteln, welche Primärregelleistung in der momentanen Betriebssituation angeboten werden kann. Damit können von dem Sollwertverteiler die für die Primärregelung zur Verfügung stehenden Turbinen ausgewählt werden, die dann - gemäß der Erfindung - in Grobregelung und in Feinregelung aufgeteilt werden. Er stellt somit sicher, dass die Summe der Leistung aus den Grob- und Feinregelungs-Turbinen immer die entsprechend der Frequenzabweichung benötigte Gesamt-Primärregelleistung ergibt. Ebenso muss er laufend das Verhältnis von Grob- zu Feinregelschritten der beteiligten Turbinen bilanzieren und gegebenenfalls das Personal der Leitwarte darauf hinweisen, dass weitere Turbinen in Grob- oder Feinregelung zu- oder abzuschalten sind.

Die Kernaussage der vorliegenden Erfindung lässt sich somit wie folgt zusammenfassen.

Es werden mehrere Turbinen/Wasserkraftwerke zu einer Erzeugungsgruppe für die Primärregelung zusammengefasst. Diese Erzeugungsgruppe stellt eine bestimmte Leistung für die Primärregelung zur Verfügung.

Der überwiegende Anteil an der Primärregelleistung wird von den Turbinen/Kraftwerken zur Verfügung gestellt, die in Grobregelung arbeiten, d.h. deren Leistungsabgabe wird in 3 möglichst großen Leistungsstufen geändert, wobei die Höhe jeder Stufe von der zur Verfügung gestellten Leistungsänderung der beteiligten Turbinen abhängt, die mindestens gleich oder größer der von der Turbinenregelung jeder beteiligten Turbine sicher beherrschbaren Mindest-Leistungsänderung ist.

Da die von den in Grobregelung arbeitenden Turbinen/Kraftwerken erzeugte Leistungsänderung pro Stufe immer eine Frequenzänderung von größer 10 mHz erzeugt, muss jede dieser Stufen von den in Feinregelung arbeiten-den Turbinen/Kraftwerken in 10 mHz Stufen zerlegt werden.

Hierzu werden entsprechende Turbinen/Kraftwerke der Erzeugungsgruppe von dem Sollwertverteiler ausgewählt. Diese in Feinregelung arbeitenden Turbinen/Kraftwerke der Erzeugungsgruppe erzeugen die Leistungsänderung einer Stufe der in Grobregelung arbeitenden Turbinen/Kraftwerke des Verbundes in 10 mHz Schritten, wobei die minimal pro 10 mHz Schritt zur Verfügung gestellte Leistungsänderung immer gleich oder höher sein muss als die von dieser Turbine/diesem Kraftwerk abgebbare Leistung bei Mindestverstellung der beteiligten Turbinen.

Die maximale für die Primärregelung zur Verfügung gestellte Leistung wird in mehreren Schritten/Stufen zurückgenommen bzw. erhöht, wobei in jedem Schritt die in Feinregelung arbeitende Turbine/das in Feinregelung arbeitende Kraftwerk in soviel Stufen geregelt wird, wie erforderlich sind, um die Leistungsänderungen und damit die Leistungsschritte der in Grobregelung arbeitenden Turbinen/Kraftwerke in die geforderten 10 mHz Schritte zu unterteilen.

**Patentansprüche**

1. Verfahren zur Primärregelung für ein Verbundstromnetz unter Verwendung von Wasserkraftwerken, insbesondere von Pumpspeicher-, Speicher- oder Laufwasserkraftwerken mit Turbinen, die über Turbinenregler verstellt werden deren Mindestrerstellung eine Frequenzänderung von größer 10 mHz erzengen, , **dadurch gekennzeichnet,**

**dass** mehrere Turbinen eines Wasserkraftwerks oder mehrerer Wasserkraftwerke als eine Erzeugungsgruppe

bezüglich der Leistungsabgabe informationstechnisch koordiniert betrieben werden,

**dass** der Erzeugungsgruppe eine Kennlinie zugeordnet wird, welche die geforderte Leistungssteigerung/Leistungsreduktion der zur Primärregelung herangezogenen Turbinen der Erzeugungsgruppe in Abhängigkeit der Frequenzänderung im Netz darstellt,

**dass** mit der Erzeugungsgruppe die erforderliche Ansprechempfindlichkeit von 10 mHz bezogen auf die gesamte Erzeugungsgruppe **dadurch** erzielt werden kann,

**dass** ein Teil der Turbinen der Erzeugungsgruppe in Feinregelung arbeitet und diese eine Primärregelleistung erbringen, die einerseits mindestens gleich oder höher als die entsprechende Leistungsabgabe bei Mindestverstellung der an der Feinregelung beteiligten Turbinen bzw. Kraftwerke ist und andererseits höchstens der Primärregelleistung entspricht, die für eine Frequenzänderung

von 10 mHz benötigt wird, bezogen auf die gesamte von der Erzeugungsgruppe zur Verfügung gestellte Primärregelleistung, sowie. dass die restlichen Turbinen bzw. Kraftwerke in Grobregelung betrieben werden und Leistungsänderungen erbringen, die deutlich höher als die bei einer Frequenzänderung von 10 mHz geforderten Leistungsänderungen sind.

2. Verfahren nach Anspruch 1,
**dadurch gekennzeichnet, dass** die für größere Leistungsänderungen notwendigen Zwischenschritte zwischen den schrittweisen Leistungsänderungen der in Grobregelung arbeitenden Turbinen bzw. Kraftwerken der Erzeugungsgruppe durch die in Feinregelung arbeitenden Turbinen bzw. Kraftwerke erbracht werden.

3. Verfahren nach Anspruch 1 oder 2,
**dadurch gekennzeichnet, dass** die gesamte zur Verfügung gestellte Primärregelleistung der Erzeugungsgruppe die Summe der abzugebenden Soll-Leistung aller in Grobregelung und in Feinregelung arbeitender Turbinen ist, wobei die in Grobregelung arbeitende(n) Turbine(n) einen überwiegenden Anteil und die in Feinregelung arbeitende(n) Turbine(n) den geringeren Restanteil der gesamten Primärregelleistung erzeugen.

4. Verfahren nach einem der vorangegangen Ansprüche,

**dadurch gekennzeichnet, dass** die in Grobregelung arbeitende(n) Turbine(n) ihre Leistungsabgabe in möglichst großen Leistungsstufen ändert (ändern)

5. Verfahren nach einem der vorangegangenen Ansprüche, **dadurch gekennzeichnet, dass** /die in Feinregelung arbeitende(n) Turbine(n) der Erzeugungsgruppe eine Leistungsänderung erzeugt (erzeugen), die in der Höhe der Leistungsänderung einer Stufe der in Grobregelung arbeitenden Turbine(n) entspricht, wobei diese Leistungsänderung in 10 mHz Schritten geschieht.

6. Verfahren nach einem der vorangegangenen Ansprüche,
**dadurch gekennzeichnet, dass** die in Feinregelung arbeitende(n) Turbine(n), in 5 Stufen verstellt wird(werden).

7. Verfahren nach einem der vorangegangenen Ansprüche,
**dadurch gekennzeichnet, dass** die abzugebende Soll-Leistung der in Feinregelung arbeitenden Turbine(n) sich nach folgender Formel berechnet:

$$P_{\text{Fein Soll}} = N \cdot x \ P_{\text{Verstell}} \ x \ 5$$

Wobei:

$P_{\text{Fein Soll}}$ = die abzugebende Feinregelungs-Solleistung
$N$ = die Anzahl der in Feinregelung arbeitenden Turbinen
$P_{\text{verstell}}$ = die Verstellleistung jeder Turbine, die größer oder gleich ihrer Mindestverstellleistung ist.

8. Verfahren nach einem der vorangegangenen Ansprüche,
**dadurch gekennzeichnet, dass** die abzugebende Soll-Leistung aller in Grobregelung arbeitender Turbinen sich nach folgender Formel berechnet:

$$P_{\text{Grob Soll}} = N \ x \ P_{\text{Verstell}} \ x \ 3$$

Wobei:

$P_{\text{Grob Soll}}$ = die abzugebende Grobregelungs-Solleistung
$N$ = die Anzahl der in Grobregelung arbeitenden Turbinen
$P_{\text{verstell}}$ = die Verstellleistung jeder Turbine, die größer oder gleich ihrer Mindestverstellleistung ist.

**9.** Verfahren nach einem der vorangegangenen Ansprüche,
**dadurch gekennzeichnet, dass** der durch die Primärregelung bedingte Verschleiß an den Stellorganen der Turbinen, bezogen auf alle beteiligten Turbinen der Erzeugungsgruppe, durch die Aufteilung in Grob-und Feinregelung minimiert ist.

**10.** Verfahren nach einem der vorangegangenen Ansprüche,
**dadurch gekennzeichnet, dass** die Berechnung der Verteilung der Sollwerte für die in Grob- und Feinregelung arbeitenden Turbinen auf unterschiedliche Mindestverstellwerte ausgelegt ist.

**11.** Verfahren nach einem der vorangegangenen Ansprüche,
**dadurch gekennzeichnet, dass** ein Sollwertverteiler für die Erzeugungsgruppe vorgesehen ist, der je nach Höhe der zur Verfügung zu stellenden Primärregelleistung und unter Berücksichtigung der aktuell möglichen Leistungsabgaben der einzelnen Turbinen der Erzeugungsgruppe die Turbinen auswählt, die in Grobregelung und die in Feinregelung betrieben werden können.

**12.** Verfahren nach einem der vorangegangenen Ansprüche,
**dadurch gekennzeichnet, dass** der Sollwertverteiler laufend überprüft, ob die gemeldete Primärregelleistung erfüllt werden kann.

**13.** Verfahren nach einem der vorangegangenen Ansprüche,
**dadurch gekennzeichnet, dass** der Sollwertverteiler im Bereich quasistationärer Frequenzabweichungen für Unterschreitung der Soll-Frequenz eine andere Höhe der zur Verfügung zustellenden Primärregelleistung vorgibt als für Überschreitung der Soll-Frequenz.

**Claims**

**1.** Method for primary control for an electrical grid using hydroelectric power stations, in particular pump-storage, storage or running-water power stations with turbines which are adjusted via turbine regulators, whose minimum adjustment produces a frequency change of more than 10 mHz
**characterized**
**in that** a plurality of turbines of a hydroelectric power station or of a plurality of hydroelectric power stations are operated, as a generating group, with the information relating to their power output being coordinated,
**in that** the generating group is associated with a characteristic which represents the required power increase/power reduction of the turbines used for primary control in the generating group, as a function of the frequency change in the grid,
**in that** the required response sensitivity of 10 mHz can be achieved for the entire generating group, by means of the generating group,
**in that** some of the turbines in the generating group operate with fine control and produce this primary control panel which, on the one hand, is at least equal to or greater than the corresponding power output for the minimum adjustment of the turbines or power stations involved in the fine control, and on the other hand corresponds at most to the primary control power which is required for a frequency change of 10 mHz, with respect to the total primary control power available from the generating group, and
**in that** the remaining turbines or power stations are operated with coarse control and produce power changes which are considerably greater than the power changes required for a frequency change of 10 mHz.

**2.** Method according to Claim 1,
**characterized**
**in that** the intermediate steps which are required for greater power changes between the step-by-step power changes of the turbines or power stations used for coarse control in the generating group are provided by the turbines or power stations operating with fine control.

**3.** Method according to Claim 1 or 2,
**characterized**
**in that** the total available primary control power in the generating group is the sum of the nominal power to be output from all the turbines operating with coarse control and with fine control, with the turbine or turbines operating with coarse control generating a majority of the total primary control power, and the turbine or turbines operating with fine control producing the lesser, remaining component of the total primary control power.

**4.** Method according to one of the preceding claims,
**characterized**
**in that** the turbine or turbines operating with coarse control changes or change its or their power output in power steps which are as large as possible.

**5.** Method according to one of the preceding claims,
**characterized**
**in that** the turbine or turbines which is or are operating with fine control in the generating group generates or generate a power change which corresponds to the level of the power change of one step of the turbine or turbines operating with coarse control, with this power change being implemented in 10 mHz steps.

**6.** Method according to one of the preceding claims, **characterized in that** the turbine or turbines which is or are operated with fine control is or are adjusted in 5 steps.

**7.** Method according to one of the preceding claims, **characterized in that** the nominal power to be output from the turbine or turbines which is or are operated with fine control is calculated using the following formula:

$$P_{\text{fine nom}} = N \times P_{\text{adj}} \times 5$$

where:

$P_{\text{fine}}$ nom = the fine control nominal power to be output

N = the number of turbines operated with fine control

$P_{\text{adj}}$ = the adjustment power of each turbine, which is greater than or equal to its minimum adjustment power.

**8.** Method according to one of the preceding claims, **characterized in that** the nominal power to be output from all of the turbines which are operated with coarse control is calculated using the following formula:

$$P_{\text{coarse nom}} = N \times P_{\text{adj}} \times 3$$

where:

Pcoarse nom = coarse control nominal power to be output

N = the number of turbines operating with coarse control

$P_{\text{adj}}$ = the adjustment power of each turbine, which is greater than or equal to its minimum adjustment power.

**9.** Method according to one of the preceding claims, **characterized in that** the wear which results from primary control on the actuating members of the turbines is minimized for all of the turbines involved in the generating group by splitting into coarse control and fine control.

**10.** Method according to one of the preceding claims, **characterized in that** the calculation of the distribution of the nominal values for the turbines which are operating with coarse control and fine control is configured for different minimum adjustment values.

**11.** Method according to one of the preceding claims, **characterized in that** a nominal value distributor is provided for the generating group which selects those turbines which can be operated with coarse control and those which can be operated with fine control, depending on the magnitude of the primary control power which can be made available and taking account of the possible power outputs from the individual turbines in the generating group at that time.

**12.** Method according to one of the preceding claims, **characterized in that** the nominal value distributor continuously checks whether the signalled primary control power can be provided.

**13.** Method according to one of the preceding claims, **characterized in that** the nominal value distributor presets a different level for primary control power to be made available, within the range of quasi-steady-state frequency discrepancies, for undershooting the nominal frequency than for overshooting the nominal frequency.

## Revendications

**1.** Procédé de régulation primaire pour un réseau électrique combiné en utilisant des centrales hydroélectriques, notamment des centrales hydroélectriques à accumulation par pompage, à accumulation ou au fil de l'eau équipées de turbines qui sont réglées par le biais de régulateurs de turbine dont le pas de réglage minimum produit une variation de fréquence supérieure à 10 mHz,

**caractérisé en ce que** plusieurs turbines d'une centrale hydroélectrique ou de plusieurs centrales hydroélectriques fonctionnent en étant coordonnées informatiquement sous la forme d'un groupe générateur concernant la puissance délivrée, qu'une courbe caractéristique est attribuée au groupe générateur, laquelle représente l'augmentation de puissance / la réduction de puissance exigée des turbines du groupe générateur utilisées pour la régulation primaire en fonction de la variation de fréquence sur le réseau, que la sensibilité de réaction nécessaire de 10 mHz par rapport à l'ensemble du groupe générateur peut être obtenue avec le groupe générateur, qu'une partie des turbines du groupe générateur fonctionne en régulation précise et celles-ci produisent une puissance régulée primaire qui est d'une part au moins égale ou supérieure à la puissance délivrée correspondante au cas d'un pas de réglage minimum des turbines ou des centrales électriques qui participent à la régulation précise et d'autre part correspond au maximum à la puissance régulée primaire qui est nécessaire pour une variation de fréquence de 10 mHz, par rapport à la puissance régulée primaire totale mise à disposition par le groupe générateur, et que le reste des turbines ou des centrales électriques fonctionnent en régulation grossière et produisent des variations de puissance qui sont nettement supérieures aux variations de puissance exigées avec une variation de fréquence de 10 mHz.

2. Procédé selon la revendication 1, **caractérisé en ce que** les étapes intermédiaires nécessaires pour des variations de puissance plus importantes entre les variations de puissance par palier des turbines ou des centrales électriques du groupe générateur qui fonctionnent en régulation grossière sont produites par les turbines ou les centrales électriques qui fonctionnent en régulation précise.

3. Procédé selon la revendication 1 ou 2, **caractérisé en ce que** la puissance régulée primaire totale mise à disposition par le groupe générateur est la somme de la puissance de consigne à délivrer de toutes les turbines fonctionnant en régulation grossière et en régulation précise, la ou les turbines fonctionnant en régulation grossière générant une part dominante et la ou les turbines fonctionnant en régulation précise générant la partie restante plus faible de la totalité de la puissance régulée primaire.

4. Procédé selon l'une des revendications précédentes, **caractérisé en ce que** la ou les turbines fonctionnant en régulation grossière modifie(nt) leur puissance délivrée par des paliers de puissance les plus grands possibles.

5. Procédé selon l'une des revendications précédentes, **caractérisé en ce que** la ou les turbines du groupe générateur fonctionnant en régulation précise produit (produisent) une variation de puissance qui correspond au niveau de variation de puissance d'un palier de la ou des turbines fonctionnant en régulation grossière, cette variation de puissance ayant lieu par pas de 10 mHz.

6. Procédé selon l'une des revendications précédentes, **caractérisé en ce que** la ou les turbines fonctionnant en régulation précise est (sont) réglée(s) en 5 paliers.

7. Procédé selon l'une des revendications précédentes, **caractérisé en ce que** la puissance de consigne à délivrer de la ou des turbines fonctionnant en régulation précise est calculée selon la formule ci-auprès :

$$P_{\text{Fein Soll}} = N \times P_{\text{Verstell}} \times 5$$

où :

P$_{\text{Fein Soll}}$ désigne la puissance de consigne à régulation précise à délivrer,
N désigne le nombre de turbines fonctionnant en régulation précise,
P$_{\text{Verstell}}$ désigne la puissance de réglage de chaque turbine, laquelle est supérieure ou égale à sa puissance de réglage minimale.

8. Procédé selon l'une des revendications précédentes, **caractérisé en ce que** la puissance de consigne à délivrer de toutes les turbines fonctionnant en régulation grossière est calculée selon la formule ci-après :

$$P_{\text{Grob Soll}} = N \times P_{\text{Verstell}} \times 3$$

où :

P$_{\text{Grob Soll}}$ désigne la puissance de consigne à régulation grossière à délivrer,
N désigne le nombre de turbines fonctionnant en régulation grossière,
P$_{\text{Verstell}}$ désigne la puissance de réglage de chaque turbine, laquelle est supérieure ou égale à sa puissance de réglage minimale.

9. Procédé selon l'une des revendications précédentes, **caractérisé en ce que** l'usure des organes de réglage des turbines résultant de la régulation primaire, par rapport à toutes les turbines du groupe générateur qui participent, est réduite grâce à la division en régulation grossière et régulation précise.

10. Procédé selon l'une des revendications précédentes, **caractérisé en ce que** le calcul de la répartition des valeurs de consigne pour les turbines fonctionnant en régulation grossière et en régulation précise est conçu sur différentes valeurs de réglage minimales.

11. Procédé selon l'une des revendications précédentes, **caractérisé en ce qu'**il est prévu un répartiteur de valeur de consigne pour le groupe générateur, lequel sélectionne les turbines qui peuvent fonctionner en régulation grossière et celles qui peuvent fonctionner en régulation précise en fonction du niveau de puissance régulée primaire à mettre à disposition et en tenant compte des puissances délivrées actuellement possibles des turbines individuelles du groupe générateur.

12. Procédé selon l'une des revendications précédentes, **caractérisé en ce que** le répartiteur de valeur de consigne vérifie continuellement si la puissance régulée primaire déclarée peut être obtenue.

13. Procédé selon l'une des revendications précédentes, **caractérisé en ce que** le répartiteur de valeur de consigne, dans la plage des écarts de fréquence quasi-stationnaires, prédéfinit un niveau de puissance régulée primaire à mettre à disposition différent pour passer au-dessous de la fréquence de consigne que pour passer au-dessus de la fréquence de consigne.

Fig. 1

Fig. 2

Fig. 3

Fig. 4

Regel-Leistung [MW]

P Grobregler (Kurve 2)
P Feinregler (Kurve 3)
P PrimReg gesamt (Kurve 1)

Freauenz [Hz]

49,75    49,80    49,85    49,90    49,95    50,00    50,05    50,10    50,15    50,20    50,25

15
10
5
0
-5
-10
-15

EP 1 903 656 B1

# Figur 5

EP 1 903 656 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10260409 B3
- DE 902824 B

- DE 378599 C

**In der Beschreibung aufgeführte Nicht-Patentliteratur**

- Qualitätsregelung im Bereich der Stromerzeugung. **Draxler, A. et al.** Elektrotechnik und Informationstechnik. Springer Verlag, 01. Oktober 1995, vol. 112, 531-538